# EUROPEAN PATENT SPECIFICATION

(11) **EP 2 033 301 B1**
(45) Date of publication and mention of the grant of the patent: **24.07.2013**
(21) Application number: 07735912.3
(22) Date of filing: 15.05.2007
(51) Int. Cl.: H02M 3/157

(54) **DIGITALLY CONTROLLED DC-DC CONVERTER**
DIGITAL GESTEUERTER DC-DC-WANDLER
CONVERTISSEUR CONTINU-CONTINU À COMMANDE NUMÉRIQUE

(30) Priority: 30.05.2006 EP 06114702
(43) Date of publication of application: 11.03.2009
(73) Proprietor: ST-Ericsson SA, 1228 Plan-les-Ouates (CH)
(72) Inventor: NUIJTEN, Petrus, A., C., M., 5656 AG Eindhoven (NL)
(74) Representative: Bird, William Edward
(86) International application number: PCT/IB2007/051842
(87) International publication number: WO 2007/138513

(56) References cited:
- EP-A2- 0 071 663
- WO-A-02/058220
- US-A1- 2002 125 872
- US-A1- 2004 052 098
- US-A1- 2004 196 013

## Description

The invention relates to a digital controller for a DC-DC converter, a digitally controlled DC-DC converter comprising such a digital controller, and an apparatus comprising the digitally controlled DC-DC converter.

US2004/0052098 discloses a digital voltage regulator using current control. The digital voltage regulator comprises an analog to digital converter for converting the analog output voltage of the regulator into a digital value. The multi-bit digital value is used in a digital controller to control switches of the converter to stabilize an output voltage of the converter. Such an analog to digital converter has high power consumption.

It is an object of the invention to provide a digital controller for a DC-DC converter with decreased power consumption.

The invention is a digital controller for a DC-DC converter as claimed in claim 1. An aspect of the invention provides a digitally controlled DC-DC converter as claimed in claim 8. A second aspect of the invention provides an apparatus as claimed in claim 11. Advantageous embodiments are defined in the dependent claims.

A digital controller for a DC-DC converter in accordance with the invention comprises a digital comparator which compares the output voltage or a tapped-in output voltage with a reference voltage to obtain a digital error signal. The comparator indicates whether the output voltage is higher or lower than the reference voltage. This digital error signal is one bit or two bits only such that a simple comparator can be used which consumes significantly less power than a much more complex analog to digital converter which supplies an 8 bit digital word. For example, if a one bit comparator is used, when the output voltage is lower than the reference level, the digital error signal has the level + E and when the output voltage is higher than the reference level, the digital error signal has the level -E. The level E of the error signal has to be selected to obtain a compromise between the amount of ripple during the steady state situation and a fast response on transients. A larger level E increases the transient response speed but has the drawback that a relatively large ripple occurs during the steady-state situation wherein the output voltage is stabilized at the desired level. A smaller level E provides a small ripple during the steady-state situation but has the drawback that the transient response speed is relatively low. To overcome the limitation of the compromise, a step-size controller is added which receives the digital error signal and controls a step size of the digital error signal to obtain a step size controlled error signal which has a larger step size during a transient condition of the converter than in a steady state condition of the converter. A switch controller receives the step size controlled error signal for controlling at least one switching element of said converter for regulating the output voltage.

The digital controller may be used in any kind of DC-DC converter, such as for example, a buck, buck-boost, cuk, zeta, up/down converters. The present invention is applicable to both voltage mode and current mode controlled converters. These high efficiency digitally controlled DC-DC converters are especially interesting for implementation in portable devices, such as for example, mobile phones, PDA's (Personal Digital Assistants, also referred to as palmtop computers), portable audio and/or video players.

In an embodiment as claimed in claim 2, the digital comparator is a one-bit comparator for supplying a one-bit digital error signal. Such a digital comparator has a low complexity and low power consumption.

In an embodiment as claimed in claim 3, the step-size controller is a digital gain controller for multiplying the digital error signal with a factor. The factor is larger during the transient condition than during the steady state condition. During a transient, the relatively large factor provides a fast response, while during the steady state, the relatively small factor provides a small ripple.

In an embodiment as claimed in claim 4, the step-size controller is constructed for controlling the factor in dependence on the digital error signal. The digital error signal itself provides all information required to detect whether the converter is in the steady state or not. If the converter is in the steady state, the output voltage is near to the reference voltage and thus it is likely that the due to the limited resolution of the digital control loop, this control loop causes the converter to oscillate around the reference voltage. This oscillation causes a high frequency ripple on the output voltage. The high frequency ripple has an amplitude which is larger if the step size is larger. An indication that the converter is in a steady state situation is that the output voltage (or a tapped-in output voltage) often crosses the reference level and the sign of the error signal changes regularly. During a transient, the output voltage is relatively far away from the reference level and thus the sign of the error signal does not change for a relatively long period in time. A possible control algorithm could be to use a small factor if a change of the sign of the error signal is detected within a predetermined small number of switching cycles of the converter, and to use a large factor if the sign of the error signal does not occur within a larger amount of switching cycles. Of course, more complex algorithms may be used to determine whether the converter is in its steady state or whether a transient is occurring. The step-size controller is able to determine itself when the large and when the small factor is required.

In an embodiment as claimed in claim 5, the digital controller further comprises a clock generator for generating a clock signal. The step-size controller increases the step size if the digital error signal does not indicate a crossing of the reference voltage by the output voltage or the tapped-in output voltage during a predetermined number of clock periods of the clock signal. If no crossing is detected for a larger number of clock periods, the output voltage does not cross the reference voltage during a relatively long period in time and most probably the converter is in the transient condition.

In an embodiment as claimed in claim 6, the step-size controller decreases the step size if the digital error signal indicates a crossing of the reference voltage by the output voltage or the tapped-in output voltage. As soon as such a crossing is detected, the step size is decreased to minimize the ripple. This has the advantage that the ripple is low, but it has to be noted that the crossing might be due to the start of a transient. It would then take a predetermined number of clock periods before is detected that no crossing occurred anymore and thus the high factor has to be used. This delayed detection of a transient does not provide an optimal response speed of the converter for transients.

In an embodiment as claimed in claim 7, the step-size controller comprises a window circuit for detecting whether the output voltage is within a window around the reference voltage. The step-size controller increases the step size if the output voltage or the tapped-in output voltage is outside the window. This solves the drawback that it takes quite some time to switch over to the high factor after a crossing is detected. As soon as the difference of the output voltage with respect to the reference voltage is too large, it is assumed that the converter is not anymore in the steady state condition and the factor is increased.

These and other aspects of the invention are apparent from and will be elucidated with reference to the embodiments described hereinafter.

In the drawings:
Fig. 1 shows a simplified block diagram of a single-reference DC-DC buck converter,
Figs. 2A and 2B show the inductor current and the output voltage of the buck converter of Fig. 1 in PWM mode,
Fig. 3 schematically shows a single-reference digitally controlled DC-DC converter,
Fig. 4 shows a quantized duty cycle in the digitally controlled voltage mode DC-DC converter,
Figs. 5A and 5B show the inductor current and the output voltage of the digitally controlled DC-DC converter with quantized duty cycle,
Fig. 6 shows a single-reference digitally voltage mode controlled DC-DC converter with adaptive step size,
Fig. 7 shows a single-reference digitally current mode controlled DC-DC converter with adaptive step size,
Fig. 8 shows a flow chart of an algorithm used by the adaptive step-size controller, and
Fig. 9 shows a voltage window to speed up the reaction of the DC-DC converter for transients.

It should be noted that items which have the same reference numbers in different Figures, have the same structural features and the same functions, or are the same signals. Where the function and/or structure of such an item has been explained, there is no necessity for repeated explanation thereof in the detailed description.

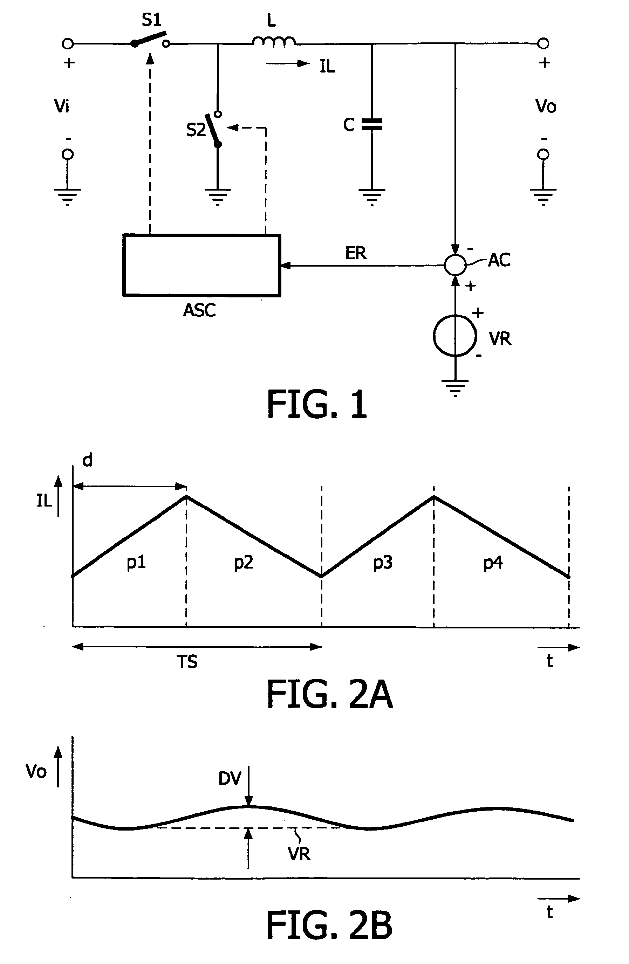

Fig. 1 shows a simplified block diagram of a single-reference DC-DC buck converter. The DC-DC converter has controllable switches S1, S2, an inductor L, a capacitor C and an analog switch controller ASC which controls the switches S1, S2. The switch S1 and the inductor L are arranged in series between the positive poles of the input voltage Vi and the output voltage Vo. The negative poles of the input voltage Vi and the output voltage Vo are grounded. The switch S2 is arranged between ground and a junction of the switch S1 and the inductor L. The smoothing capacitor C is arranged between the output and ground to reduce the fluctuations of the output voltage Vo at the converter output. An analog comparator AC compares the output voltage Vo with the reference voltage VR to generate an analog error voltage ER which usually is the difference between the (tapped-in) output voltage Vo and the reference voltage VR. The inductor L stores electrical energy when the switch S1 is closed and the switch S2 is open, and transfers energy to the output when the switch S1 is open and the switch S2 is closed. The analog switch controller ASC is usually designed to control the switches S1 and S2 to provide a stabilized output voltage Vo at the output. The operation of the buck converter is discussed with respect to the signal waveforms shown in Figs. 2A and 2B.

Figs. 2A and 2B show the inductor current and the output voltage of the buck converter of Fig. 1 in PWM mode. In this example, the output voltage Vo is regulated towards the reference voltage VR.

Fig. 2A shows the inductor current IL and Fig. 2B the output voltage Vo of the DC-DC converter during pulse-width-modulated (PWM) operation. In the PWM mode, the DC-DC converter operates with fixed switching periods TS. Each switching period TS has two phases p1 and p2. During phase p1, the switch S1 is closed (the transistor is conductive) and switch S2 is open (the transistor is non-conductive). During the phase p1, the current IL through the inductor increases because the voltage Vi - Vo across the inductor L is positive. During the second phase p2, the switch S2 is closed and switch S1 is open. Now, the voltage -Vo across the inductor L is negative and the inductor current IL decreases.

The varying current IL causes a voltage ripple DV at the capacitor C (at a constant load). The frequency of this voltage ripple equals the switching frequency FSW which is the reciprocal of the switching period TS of the DC-DC converter. The duty-cycle d is defined as the relative duration of the phase p1: d = p1/(p1+p2).

It has to be noted that WO02/058220 discloses a single reference DC/DC converter wherein the dependency of the voltage sensing on the ripple voltage is decreased. A comparator compares the output voltage with a reference voltage. If the output voltage is higher than the reference voltage the duty cycle has its minimal value, if the output voltage is lower than the reference voltage, the duty cycle has its maximum value.

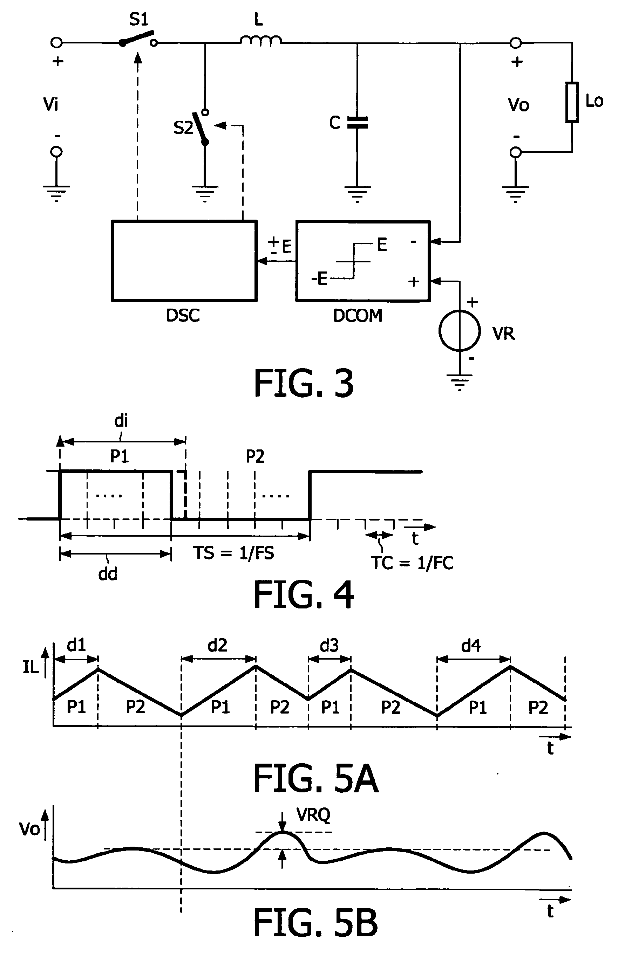

Fig. 3 schematically shows a single-reference digitally controlled DC-DC converter. The DC-DC converter is operated with voltage mode control. The DC-DC controller of Fig. 3 is the DC-DC controller of Fig. 1 wherein the analog comparator AC has been replaced by the digital comparator DCOM, and wherein the analog switch controller ASC has been replaced by the digital switch controller DSC. The digital comparator DCOM compares the output voltage Vo, which is supplied to the load LO, with the reference voltage VR. If the output voltage Vo is lower than the reference voltage VR, the digital comparator DCOM supplies the level +E, if the output voltage Vo is higher than the reference voltage VR, the digital comparator DCOM supplies the level -E. Thus, in this embodiment, the output of the digital comparator DCOM is a one-bit signal. The value of the level E is selected to suit the application. The level E is also referred to as the step size. As will become clear, the larger the step size E is, the faster the response on transients will be but the higher the ripple will be in the steady state situation.

The digital switch controller DSC increases the duty cycle if the level +E is received and decreases the duty cycle if the level -E is received. However, as discussed with respect to Fig. 4 the digital switch controller DSC can only produce a limited set of duty cycles determined by clock instants of a clock signal used by the digital circuits.

Fig. 4 shows a quantized duty cycle in the digitally controlled DC-DC converter. The clock instants are depicted along the horizontal axis. A clock period is indicated by the reciprocal of the clock frequency: TC = 1/FC. A switching period of the converter is indicated by TS which is the reciprocal of the switching frequency FS of the converter. It is assumed that at a certain instant the digital error signal has the level -E which indicates that the duty cycle has to decrease to the desired duty cycle value di. However this desired duty cycle di cannot be generated because the switching over from phase p1 to phase p2 can only be performed at a clock instant. Consequently, the desired duty cycle di is approximated by the duty cycle dd. Usually, the actual duty cycle dd is obtained by truncating or rounding the desired duty cycle di to the nearest quantized duty cycle. These deviations of the actual duty cycle dd from the desired duty cycle di result in an increase of the ripple on the output voltage Vo as illustrated in Figs. 5A and 5B.

For example, in a practical implementation of a DC-DC converter the clock frequency is 100 MHz and the switching frequency is 1 MHz. Consequently, the duty cycle resolution is approximately 1%. This implies that for an input voltage Vi of 3V, the output voltage Vo of the DC-DC converter can be stepped with 30 mV steps.

Figs. 5A and 5B show the inductor current and the output voltage of the digitally controlled DC-DC converter with quantized duty cycle. Fig. 5A shows the inductor current IL for a sequence of quantized duty cycles d1, d2, d3, d4. Fig. 5B shows the resulting output voltage Vo. The quantization of the duty cycles causes an additional voltage ripple component VRQ on the output voltage Vo. For example, in present digital DC-DC converters, this ripple may range from 20 to 70 mV. This large voltage ripple may degrade the performance of high-precision analog circuits, such as for example, imagers for photo cameras. Therefore, these digitally controlled DC-DC converters are not used in high-end applications requiring an extremely low voltage ripple on the supply voltage.

In a duty-cycle modulated voltage mode DC-DC converter, the digital switch controller DSC comprises a filter with a proportional, integrating and differentiating part. If the step size E is decreased, the input signal of the filter has a lower amplitude. This will lead to a smaller fluctuation of the duty-cycle at the filter output in steady-state situations and thus to less ripple in the output voltage Vo. The DC value of the duty cycle will stay correct because of the integrating part of the filter. However, a smaller step size E causes the DC-DC converter to react slower on fast changing conditions because more switching cycles are required for a smaller step size E to change from one duty-cycle value to another duty-cycle value. On the other hand, if the step size E is increased, the converter will have a fast transient response, but the voltage ripple in the steady-state situation is quite large.

A fast transient response is mandatory when the DC-DC converter is used for the power supply of integrated circuits (IC's) to prevent large voltage overshoots at the output of the DC-DC converter. These voltage overshoots would cause permanent damage to the connected IC's. However, consequently, the steady-state behavior is not optimal.

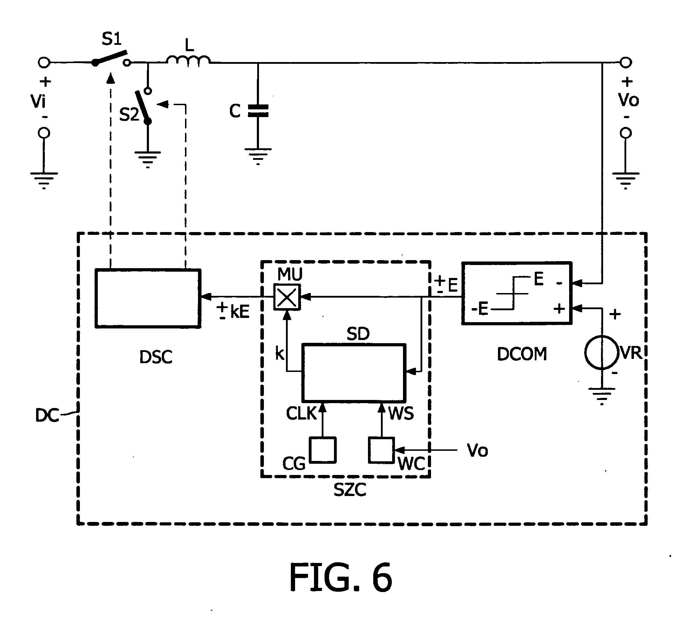

Fig. 6 shows a single-reference digitally voltage mode controlled DC-DC converter with adaptive step size. The DC-DC converter of Fig. 6 is the DC-DC converter of Fig. 3 to which a step size controller SZC has been added in-between the digital comparator DCOM and the digital switch controller DSC. The digital controller DC comprises the digital switch controller DSC, the step size controller SZC and the digital comparator DCOM. The parts of the digital controller DC may be integrated in the same chip.

The step size controller SZC comprises a digital multiplier MU which multiplies the error signal +E or -E (collectively referred to as E) supplied by the digital comparator DCOM with a factor k to obtain the step size controlled error signal +kE or -kE (collectively referred to as kE) to the digital switch controller DSC. The step size determining circuit SD receives the error signal E and a clock signal CLK to supply the factor k to the digital multiplier MU. The clock generator CG supplies the clock signal CLK. The optional window circuit WC receives the output voltage Vo to supply the window signal WS which indicates whether the output signal is inside or outside the window around the reference voltage VR to the step size determining circuit SD.

The step size determining circuit SD controls the factor k to have a relatively high value during large signal transient conditions and a relatively small value during the steady state situation. Consequently, due to the controllable multiplication coefficient k for the error signal E, the step size controlled error signal kE has a relatively large step size during transients and a relatively small step size during steady state.

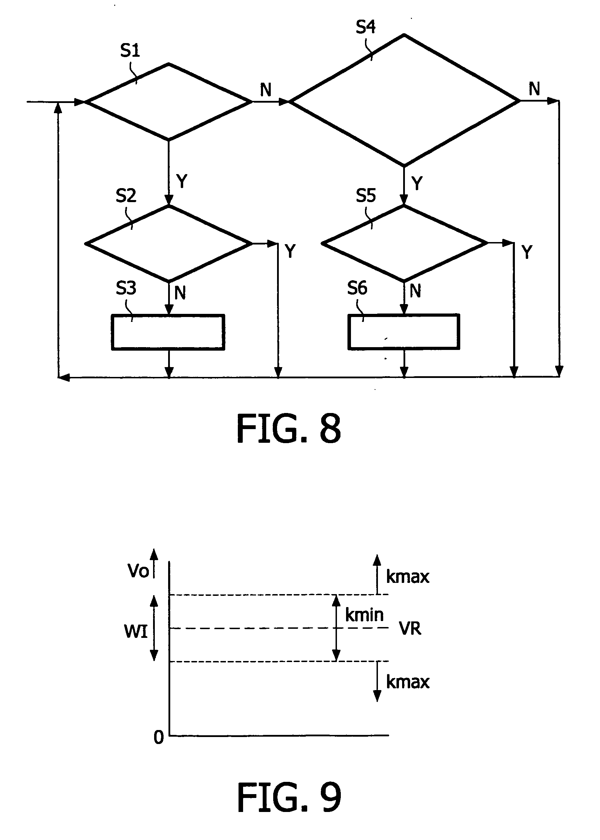

The step size determining circuit SD may use the error signal E to decide on the value of the factor k. In the steady state, the output voltage Vo is near to the reference voltage VR. Usually, due to the time quantization of the duty cycle, the output voltage Vo oscillates with a relatively high frequency around the reference voltage VR. Consequently, the sign of the error signal E changes within short time periods. This fast changing sign can be detected and used to decrease the value of the factor k. On the other hand, during a transient, the output voltage Vo stays for a relatively long period in time below or above the reference voltage VR. Consequently, a transient is detected if no sign change of the error signal E occurs during a relatively long period of time. Now, the value of the factor k can be increased. A possible control algorithm is elucidated with respect to the flowchart of Fig. 8.

A disadvantage of this approach is that it takes some time before the step size determining circuit is able to detect that the polarity of the error signal E is not changing any more. Thus, the increase of the factor k in response to a transient is delayed until the time for detecting that no sign changes of the error signal E have occurred has been passed. An improvement is reached if the window circuit WC is added and also is detected whether the output voltage Vo is outside the window around the reference voltage VR. The factor k is increased as soon as the output voltage Vo moves out of the window. The window circuit may be a digital comparator circuit which besides the output voltage Vo also receives the reference voltage VR. This approach reduces the voltage-overshoots or undershoots during a large-signal transient.

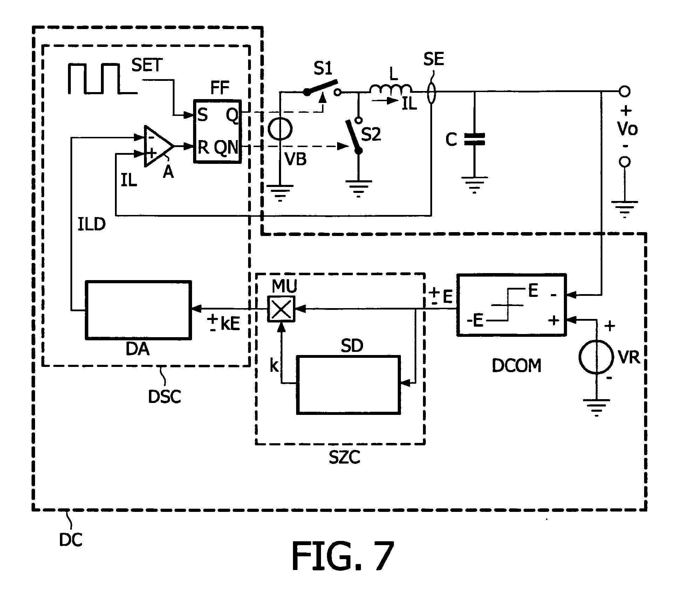

Fig. 7 shows a single-reference digitally current mode controlled DC-DC converter with adaptive step size. Starting from the DC-DC controller of Fig. 6, a current sensor SE is added, and the digital switch controller DSC becomes more complex and now comprises a digital to analog converter DA, an analog comparator A and a set-reset flip-flop FF.

The set-reset flip-flop FF has a set input S which receives a periodical set signal SET, a reset input R, a non-inverted output Q coupled to a control input of the switch S1, and an inverting output QN coupled to a control input of the switch S2. The comparator A has an inverting input to receive the output signal of the digital to analog converter DA, an non-inverting input coupled to the current sensor SE to receive a sense value for the current IL through the inductor L, and an output connected to the reset input R. The digital to analog converter DA receives the step size controlled error signal kE.

The operation of a current mode controlled DC-DC converter is well know and is therefore not elucidated in detail. When the set-reset flip-flop FF is set by the set signal SET, the switch S1 is closed and the switch S2 is opened. The current through the inductor L starts increasing. At the instant the current through the inductor L reaches the set value ILD supplied by the digital to analog converter DA the set-reset flip-flop FF is reset: the switch S1 is opened and the switch S2 is closed. The current through the inductor L starts decreasing until the set signal SET again sets the set-reset flip-flip FF.

The resolution of the current mode converter can be much higher than the resolution of a duty-cycle controlled voltage mode converter. A high precision digital to analog converter with many bits (10 bits or more) and thus a low quantization error is easily realizable in an integrated circuit and operates without high power consumption. The addition of the step size controller SZC provides the possibility to obtain a very low quantization voltage ripple on the output voltage Vo.

Fig. 8 shows a flow chart of an algorithm used by the adaptive step-size controller. A basic strategy for the step size controller SZC is to provide a large multiplication factor k during large signal transient conditions and a small factor k in the steady state situation when the output voltage Vo is close to the reference voltage VR.

An example of a strategy is more detailed in the now following. The DC-DC converter is near its steady state when the difference between the converter output voltage Vo and the reference voltage VR is small. However, the DC-DC controller only receives information about the sign of this voltage difference and no information on its value. A near steady state condition is detected in an indirect manner by detecting the duration between successive instants at which the output voltage Vo crosses the reference voltage VR. If is detected that this duration is relatively short, the output voltage Vo is most probably oscillating around the reference voltage VR and the factor k is made small to minimize the ripple on the output voltage Vo. If this duration is relatively long, the output voltage Vo is most probably relatively far away from the reference voltage VR due to a transient and the factor k is made large to obtain a fast reaction on the transient. Alternatively, instead of determining the duration between two successive crossings it is also possible to always set the factor k to its minimum value in one step of in a series of steps if a crossing is detected, and to set the factor k to its maximum value in one step or in a series of steps if is detected that no crossing occurred during a predetermined period in time.

This latter example of the control algorithm is illustrated with respect to the flowchart of Fig. 8. In step S1, is detected whether the output voltage Vo crosses the reference voltage VR. If yes, the algorithm proceeds to step S2, if no, the algorithm proceeds to step S4. In step S2 it is checked whether the factor k has its minimal value. If yes, k has already the correct minimal value. If no, in step S3 the value of k is decreased. This decrease of the factor k may be performed in one step or in several steps until the minimum value of the factor k is reached. If the factor k is decreased in several steps, every time a crossing is detected the value of k is made smaller until the minimum value is reached.

In step S4 it is checked whether the output voltage Vo did not cross the reference voltage VR during N switching cycles of the converter. N is an integer value larger than 1. If no, the algorithm proceeds to the start. If yes, in step S5 is checked whether the factor k has its maximum value. If yes, the algorithm proceeds to the start. If no, in step S6 the value of k is increased in one step or in several steps until the maximum value is reached. Preferably, the value of k is increased in a single step to its maximum value to speed up the reaction of the DC-DC converter on the transient. This algorithm provides a DC-DC converter with an output voltage Vo which after a transient smoothly progresses from large signal behavior optimal for transients to small signal behavior optimal for the steady state. The voltage ripple in steady state is small. However, the reaction to a sudden change in the input voltage Vi, the reference voltage VR, or the load current through the load LO is not fast because it takes some time before the factor k is enlarged. Only after quite some switching cycles of the converter it becomes clear that no crossing occurred and the factor k can be increased. This causes an unnecessarily large overshoot or droop in the output voltage Vo of the DC-DC converter during transients. This behavior can be avoided by introducing a window as discussed with respect to Fig. 9.

It has to be noted that many alternative algorithms can be implemented. For example, the duration between two successive crossings may be used to control the amount the factor k is changed. For example, below a particular duration, the factor k is decreased, and above this particular duration or another longer duration the factor k is increased. The amount of increase or decrease may depend on the difference between the actual duration and the particular duration or the another longer duration.

Fig. 9 shows a voltage window to speed up the reaction of the DC-DC converter for transients. The window circuit WC detects whether the output voltage Vo is inside or outside the window WI around the reference voltage VR. If the output voltage Vo is outside the window WI, the value of the factor k is set to its maximum value. If the output voltage Vo is inside the window WI, the value of the factor k is decreased in one step or in several steps to the minimum value. During a transient (an abrupt large signal change), the output voltage Vo of the DC-DC converter shifts outside the window WI within a single switching cycle. This is detected at the end of the switching cycle and the factor k is set to its maximum value within a single switching cycle.

## Claims

1. A digital controller (DC) for a DC-DC converter supplying an output voltage (Vo) to a load (LO), the digital controller (DC) comprises:
an one bit or two bits digital comparator (DCOM) for comparing the output voltage (Vo) or a tapped-in output voltage with a reference voltage (VR) to obtain a digital error signal (E),
a step-size controller (SZC) for receiving the digital error signal (E) to control a step size of the digital error signal (E) to obtain a step size controlled error signal (kE) having a larger step size during a transient condition of said converter than in a steady state condition of said converter, and
a switch controller (DSC) for receiving the step size controlled error signal (kE) for controlling at least one switching element (S1, S2) of said converter for regulating the output voltage (Vo).

2. A digital controller (DC) as claimed in claim 1, wherein the digital comparator (DCOM) is a one-bit comparator for supplying a one-bit digital error signal (E).

3. A digital controller (DC) as claimed in claim 1 or 2, wherein the step-size controller (SZC) is a digital gain controller for multiplying the digital error signal (E) with a larger factor (k) during the transient condition than during the steady state condition.

4. A digital controller (DC) as claimed in claim 3, wherein the step-size controller (SZC) is constructed for controlling the factor (k) in dependence on the digital error signal (E).

5. A digital controller (DC) as claimed in any one of the preceding claims, further comprising a clock generator (CG) for generating a clock signal (CLK), and wherein the step-size controller (SZC) further receives the clock signal (CLK) and is constructed for increasing the step size if the digital error signal (E) does not indicate a crossing of the reference voltage (VR) by the output voltage (Vo) or the tapped-in output voltage during a predetermined number of clock periods of the clock signal (CLK).

6. A digital controller (DC) as claimed in any one of the preceding claims, wherein the step-size controller (SZC) is constructed for decreasing the step size if the digital error signal (E) indicates a crossing of the reference voltage (VR) by the output voltage (Vo) or the tapped-in output voltage.

7. A digital controller (DC) as claimed in any of the preceding claims, wherein the step-size controller (SZC) comprises a window circuit (WC) for detecting whether the output voltage (Vo) is within a window (WI) around the reference voltage (VR) and wherein the step-size controller (SZC) is constructed for increasing the step size if the output voltage (Vo) or the tapped-in output voltage is outside the window (WI).

8. A digitally controlled DC-DC converter comprising:
an inductor (L),
the switching element (S1, S2) being coupled to the inductor (L) to vary an inductor current (IL) through the inductor (L), and,
the digital controller (DC) as claimed in any of the preceding claims.

9. A digitally controlled DC-DC converter as claimed in claim 8, being a voltage controlled converter wherein the digital controller (DC) is constructed to directly control on-and off-times of the switching element (S1, S2).

10. A digitally controlled DC-DC converter as claimed in claim 8, being a current controlled converter wherein the digital controller (DC) is constructed to supply a set-current (ILD) to a current control loop comprising a comparator (A) or comparing an actual current (IL) in the converter with the set-current (ILD) to determine a switch off instant of the switching element (S1).

11. An apparatus comprising the digitally controlled DC-DC converter as claimed in claims 10 or 11 and the load.

12. An apparatus as claimed in claim 11 being one out of a mobile phone, a PDA, a portable audio and/or video player.

## Patentansprüche

1. Digitale Steuerung (DC) für einen DC-DC-Wandler (Gleichspannungswandler), der einer Last (LO) eine Ausgangsspannung (Vo) zuführt, wobei die digitale Steuerung (DC) umfasst:
einen Ein-Bit- oder Zwei-Bit-Digitalkomparator (DCOM) zum Vergleichen der Ausgangsspannung (Vo) oder einer abgegriffenen Ausgangsspannung mit einer Referenzspannung (VR), um ein digitales Fehlersignal (E) zu erhalten,
eine Schrittweitensteuerung (SZC) zum Empfangen des digitalen Fehlersignals (E) zur Steuerung einer Schrittweite des digitalen Fehlersignals (E), um ein in der Schrittweite gesteuertes Fehlersignal (kE) zu erhalten, das eine größere Schrittweite während eines Übergangszustandes des Wandlers als in einem Beharrungszustand des Wandlers hat, und
eine Schaltungssteuerung (DSC) zum Empfangen des in der Schrittweite gesteuerten Fehlersignals (kE) zum Steuern mindestens eines Schaltelements (S1, S2) des Wandlers zum Regulieren der Ausgangsspannung (Vo).

2. Digitale Steuerung (DC) nach Anspruch 1, wobei der digitale Komparator (DCOM) ein Ein-Bit-Komparator zum Zuleiten eines digitalen Ein-Bit-Fehlersignals (E) ist.

3. Digitale Steuerung (DC) nach Anspruch 1 oder 2, wobei die Schrittweitensteuerung (SZC) eine digitale Verstärkungssteuerung zum Multiplizieren des digitalen Fehlersignals (E) mit einem größeren Faktor (k) während des Übergangszustands als während des Beharrungszustandes ist.

4. Digitale Steuerung (DC) nach Anspruch 3, wobei die Schrittweitensteuerung (SZC) zum Steuern des Faktors (k) abhängig vom digitalen Fehlersignal (E) konstruiert ist.

5. Digitale Steuerung (DC) nach einem der vorangehenden Ansprüche, des Weiteren umfassend einen Taktgenerator (CG) zum Generieren eines Taktsignals (CLK) und wobei die Schrittweitensteuerung (SZC) des Weiteren das Taktsignal (CLK) empfängt und zum Erhöhen der Schrittweite konstruiert ist, wenn das digitale Fehlersignal (E) keine Kreuzung der Referenzspannung (VR) durch die Ausgangsspannung (Vo) oder die, abgegriffene Ausgangsspannung während einer vorbestimmten Anzahl von Taktperioden des Taktsignals (CLK) anzeigt.

6. Digitale Steuerung (DC) nach einem der vorangehenden Ansprüche, wobei die Schrittweitensteuerung (SZC) zum Senken der Schrittweite konstruiert ist, wenn das digitale Fehlersignal (E) eine Kreuzung der Referenzspannung (VR) durch die Ausgangsspannung (Vo) oder die abgegriffene Ausgangsspannung anzeigt.

7. Digitale Steuerung (DC) nach einem der vorangehenden Ansprüche, wobei die Schrittweitensteuerung (SZC) eine Fensterschaltung (WC) zum Erfassen, ob die Ausgangsspannung (Vo) innerhalb eines Fensters (WI) um die Referenzspannung (VR) liegt, umfasst und wobei die Schrittweitensteuerung (SZC) zum Erhöhen der Schrittweite konstruiert ist, wenn die Ausgangsspannung (Vo) oder die abgegriffene Ausgangsspannung außerhalb des Fensters (WI) liegt.

8. Digital gesteuerter DC-DC-Wandler (Gleichspannungswandler), umfassend:
einen Induktor (L),
das Schaltelement (S1, S2), das an den Induktor (L) gekoppelt ist, um einen Induktorstrom (IL) durch den Induktor (L) zu variieren, und
die digitale Steuerung (PC) nach einem der vorangehenden Ansprüche.

9. Digital gesteuerter DC-DC-Wandler nach Anspruch 8, der ein spannungsgesteuerter Wandler ist, wobei die digitale Steuerung (DC) zum direkten Steuern von Ein- und Aus-Zeiten des Schaltelements (S1, S2) konstruiert ist.

10. Digital gesteuerter DC-DC-Wandler nach Anspruch 8, der ein stromgesteuerter Wandler ist, wobei die digitale Steuerung (DC) zum Zuleiten eines Soll-Stroms (ILD) zu einer Stromsteuerschleife konstruiert ist, die einen Komparator (A) umfasst oder einen Ist-Strom (IL) im Wandler mit dem Soll-Strom (ILD) vergleicht, zum Bestimmen eines Ausschaltmoments des Schaltelements (S1).

11. Vorrichtung, umfassend den digital gesteuerten DC-DC-Wandler nach Anspruch 10 oder 11 und die Last.

12. Vorrichtung nach Anspruch 11, die eines von einem Mobiltelefon, einem PDA, eine tragbaren Audio- und/oder Videoplayer ist.

## Revendications

1. Unité de commande numérique (DC) pour un convertisseur continu-continu fournissant une tension de sortie (Vo) à une charge (LO), l'unité de commande numérique (DC) comprenant :
un comparateur numérique à un bit ou à deux bits (DCOM) pour comparer la tension de sortie (Vo) ou une tension de sortie prélevée à une tension de référence (VR) pour obtenir un signal d'erreur numérique (E),
une unité de commande de taille de pas (SZC) pour recevoir le signal d'erreur numérique (E) pour commander une taille de pas du signal d'erreur numérique (E) afin d'obtenir un signal d'erreur à taille de pas commandée (kE) ayant une taille de pas plus grande pendant une condition d'état transitoire dudit convertisseur que pendant une condition d'état stable dudit convertisseur, et
une unité de commande de commutation (DSC) pour recevoir le signal d'erreur à taille de pas commandée (kE) pour commander au moins un élément de commutation (S1, S2) dudit convertisseur afin de réguler la tension de sortie (Vo).

2. Unité de commande numérique (DC) selon la revendication 1, dans laquelle le comparateur numérique (DCOM) est un comparateur à un bit pour fournir un signal d'erreur numérique à un bit (E).

3. Unité de commande numérique (DC) selon la revendication 1 ou 2, dans laquelle l'unité de commande de taille de pas (SZC) est une unité de commande de gain numérique pour multiplier le signal d'erreur numérique (E) par un facteur (k) plus grand pendant la condition d'état transitoire que pendant la condition d'état stable.

4. Unité de commande numérique (DC) selon la revendication 3, dans laquelle l'unité de commande de taille de pas (SZC) est construite pour commander le facteur (k) en fonction du signal d'erreur numérique (E).

5. Unité de commande numérique (DC) selon l'une quelconque des revendications précédentes, comprenant en outre un générateur d'horloge (CG) pour produire un signal d'horloge (CLK), et dans laquelle l'unité de commande de taille de pas (SZC) reçoit en outre le signal d'horloge (CLK) et est construite pour augmenter la taille de pas si le signal d'erreur numérique (E) n'indique pas un croisement de la tension de référence (VR) par la tension de sortie (Vo) ou la tension de sortie prélevée pendant un nombre prédéterminé de périodes d'horloge du signal d'horloge (CLK).

6. Unité de commande numérique (DC) selon l'une quelconque des revendications précédentes, dans laquelle l'unité de commande de taille de pas (SZC) est construite pour diminuer la taille de pas si le signal d'erreur numérique (E) indique un croisement de la tension de référence (VR) par la tension de sortie (Vo) ou la tension de sortie prélevée.

7. Unité de commande numérique (DC) selon l'une quelconque des revendications précédentes, dans laquelle l'unité de commande de taille de pas (SZC) comprend un circuit de fenêtrage (WC) pour détecter si la tension de sortie (Vo) est à l'intérieur d'une fenêtre (WI) autour de la tension de référence (Vo) et dans laquelle l'unité de commande de taille de pas (SZC) est construite pour augmenter la taille de pas si la tension de sortie (Vo) ou la tension de sortie prélevée est à l'extérieur de la fenêtre (WI).

8. Convertisseur continu-continu à commande numérique comprenant :
une bobine d'induction (L),
l'élément de commutation (S1, S2) étant couplé à la bobine d'induction (L) pour modifier un courant d'induction (IL) à travers la bobine d'induction (L), et
l'unité de commande numérique (DC) selon l'une quelconque revendication précédentes.

9. Convertisseur continu-continu à commande numérique selon la revendication 8, étant un convertisseur à commande de tension dans lequel l'unité de commande numérique (DC) est construite pour commander directement des temps de mise en circuit et de mise hors circuit de l'élément de commutation (S1, S2).

10. Convertisseur continu-continu à commande numérique selon la revendication 8, étant un convertisseur à commande de courant dans lequel l'unité de commande numérique (DC) est construite pour fournir un courant de réglage (ILD) à une boucle de commande de courant comprenant un comparateur (A) pour comparer un courant actuel (IL) dans le convertisseur au courant de réglage (ILD) pour déterminer un instant de coupure de l'élément de commutation (S1).

11. Appareil comprenant le convertisseur continu-continu à commande numérique selon les revendications 10 ou 11 et la charge.

12. Appareil selon la revendication 11, étant un appareil parmi un téléphone mobile, un assistant numérique personnel, un lecteur audio et/ou vidéo portable.
